# EUROPÄISCHE PATENTSCHRIFT

(11) **EP 2 380 422 B1**
(45) Veröffentlichungstag und Bekanntmachung des Hinweises auf die Patenterteilung: **13.12.2017**
(21) Anmeldenummer: 11162804.6
(22) Anmeldetag: 18.04.2011
(51) Int. Cl.: F15B 13/02, F15B 11/16, A01B 63/10

(54) **Hydraulische Anordnung**
Hydraulic assembly
Agencement hydraulique

(30) Priorität: 20.04.2010 DE 102010027964
(43) Veröffentlichungstag der Anmeldung: 26.10.2011
(73) Patentinhaber: Deere & Company, Moline, IL 61265 (US)
(72) Erfinder: Bitter, Marcus, 68199, Mannheim (DE)
(74) Vertreter: Reichert, Christian

(56) Entgegenhaltungen:
- EP-A1- 0 566 449
- EP-A2- 0 607 108
- DE-A1- 2 745 937
- DE-A1- 3 826 164
- DE-A1- 4 123 151
- DE-A1- 4 417 962
- DE-A1- 19 646 427
- DE-A1- 19 828 963
- DE-A1- 19 904 616
- DE-U1-202004 010 530

## Beschreibung

Die Erfindung betrifft eine hydraulische Anordnung zur Steuerung der Versorgungsprioritäten mehrerer hydraulischer Verbraucher, mit einer Hydraulikpumpe und einem Hydrauliktank, wenigstens einem ersten hydraulischen Verbraucher mit einer Versorgungspriorität erster Stufe, einem zweiten hydraulischen Verbraucher mit einer der ersten Stufe untergeordneten Versorgungspriorität zweiter Stufe, einem dritten hydraulischen Verbraucher mit einer der zweiten Stufe untergeordneten Versorgungspriorität dritter Stufe, wobei jeder Verbraucher über eine eigene Versorgungsleitung hydraulisch mit der Hydraulikpumpe verbindbar ist.

Bei hydraulischen Systemen in landwirtschaftlichen Fahrzeugen, wie z.B. in landwirtschaftlichen Schleppern oder Traktoren, aber auch in Erntemaschinen, sowie Bau- und Forstmaschinen ist es bekannt, lastdruckabhängige Versorgungen für die einzelnen hydraulischen Verbraucher vorzusehen. Derartige Systeme, auch als Load-Sensing-Systeme bekannt, können sowohl mit Konstantpumpen als auch mit Fördervolumenstrom geregelten Verstellpumpen betrieben werden. Bei der Verwendung von Konstantpumpen wird eine lastdruckabhängige Versorgung dadurch realisiert, dass ein konstanter Fördervolumenstrom über eine Abführleitung lastdruckabhängig abgeführt wird. Verstellpumpen hingegen können direkt lastdruckabhängig betrieben werden. Es ist ferner bekannt, die hydraulischen Verbraucher an den genannten Fahrzeugen prioritätsgesteuert zu versorgen, so dass hydraulische Verbraucher mit einer höheren Prioritätsstufe gegenüber hydraulischen Verbrauchern mit eine geringeren Prioritätsstufe vorrangig hydraulisch versorgt werden, falls es betriebsbedingt zu einer hydraulischen Unterversorgung kommt. So gehören hydraulische Verbraucher, wie z.B. eine hydraulisch betriebene Lenkung oder hydraulisch betriebene Bremsanlagen einer höheren Prioritätsstufe an, als beispielsweise eine hydraulisch betriebene Federung am Fahrzeug. Diese kann wiederum gegenüber einem weiteren hydraulischen Verbraucher, beispielsweise einem am Fahrzeug befindlichen Hubwerk, ebenfalls einer höheren Prioritätsstufe angehören. So sind oftmals in einem lastdruckabhängigen hydraulischen System mehrere Prioritätsstufen für die unterschiedlichen hydraulischen Verbraucher zu berücksichtigen, siehe z.B. DE3826164A1. Um eine zuverlässige Prioritätssteuerung zu realisieren, werden in hydraulischen Load-Sensing-Systemen Prioritätsventile in Form von Druckwaagen verwendet, die eine Vorrangigkeit in der Versorgung einzelner hydraulischer Verbraucher bei einer hydraulischen Unterversorgung des Gesamtsystems steuern. In der Regel sind die einzelnen hydraulischen Verbraucher mit jeweils wenigstens einem Steuerventil verbunden, über das ein Zulauf des Fördervolumenstroms seitens der Hydraulikpumpe gesteuert wird. Im Zulauf jedes Steuerventils befindet sich ein Prioritätsventil, das von einem Lastdrucksignal eines vorrangigen hydraulischen Verbrauchers geschlossen wird und den Volumenstrom reduziert bzw. androsselt, um die hydraulische Versorgung der vorrangigen Ventile zu gewährleisten. So wird zur Realisierung von zwei Prioritätsstufen in dem im Stand der Technik bekannten hydraulischen Systemen oder Anordnungen ein Prioritätsventil eingesetzt. Für die Realisierung von drei Prioritätsstufen, wie oben erwähnt, werden somit üblicherweise zwei Prioritätsventile benötigt. Nachteilig wirkt sich bei den bekannten Systemen aus, dass diese für eine vorgegebene Anzahl von Prioritätsstufen mit meist auch einer vorgegebenen Anzahl von hydraulischen Verbrauchern ausgelegt und konzipiert sind, dass heißt, relativ unflexibel und im nachhinein nur mit viel Aufwand erweiterbar bzw. anpassbar sind. Sollte beispielsweise ein hydraulisches System mit zwei Prioritätsstufen nachträglich auf eins mit einer weiteren Prioritätsstufe erweitert werden, oder sollte ein weiterer hydraulischer Verbraucher einer bestehenden Prioritätsstufe hinzugefügt werden, so ist dies in der Regel mit erheblichem baulichen Aufwand und erhöhtem Bauvolumen verbunden. Will man dies verhindern, so muss man sich auf wenige, z.B. zwei Prioritätsstufen beschränken und die sonst verschieden unterrangigen hydraulischen Verbraucher in eine Prioritätsstufe zusammenlegen. Dies kann jedoch bei einer Unterversorgung des Gesamtsystems dazu führen, dass einer der zusammengelegten hydraulischen Verbraucher keine ausreichende Volumenstromversorgung erfährt und somit ausfällt. Besonders nachteilig ist dies, wenn es sich um einen hydraulischen Verbraucher handelt, der gegenüber einem in der gleichen Prioritätsstufe zusammengelegten hydraulischen Verbraucher eine eigentlich höhere Versorgungspriorität genießen sollte.

Die der Erfindung zugrunde liegende Aufgabe wird darin gesehen, eine hydraulische Anordnung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine hydraulische Anordnung der eingangs genannten Art derart ausgebildet, dass die Versorgungsleitungen für den ersten und den zweiten Verbraucher über ein gemeinsames lastdruckgesteuertes Prioritätsventil und die Versorgungsleitung für den dritten Verbraucher über ein weiteres lastdruckgesteuertes Prioritätsventil mit der Hydraulikpumpe verbindbar sind und eine zur Hydraulikpumpe führende erste Lastdruckleitung mit einer Lastdruckleitung des dritten hydraulischen Verbrauchers und mit einer zweiten Lastdruckleitung verbunden ist. Dadurch, dass für einen ersten hydraulischen Verbraucher mit einer ersten Versorgungspriorität und für einen zweiten hydraulischen Verbraucher mit einer der ersten untergeordneten zweiten Versorgungspriorität ein gemeinsames Prioritätsventil vorgesehen ist, kann der zweite hydraulische Verbraucher wahlweise hinzugefügt oder entfernt werden, ohne einen wesentlichen Montageaufwand betreiben zu müssen. Ein für den zweiten hydraulischen Verbraucher vorgesehener Ausgang am gemeinsamen Prioritätsventil, kann je nach Bedarf bzw. wahlweise verschlossen oder mit dem wahlweise zweiten hydraulischen Verbraucher verbunden werden. Vorteile der erfindungsgemäßen hydraulischen Anordnung ergeben sich insbesondere darin, dass erfindungsgemäß ein modulares, erweiterbares und damit variables hydraulisches Versorgungsprioritätssystem geschaffen wird, welches auf einfache Weise auf unterschiedliche Homologationsanforderungen anpassbar ist. Ferner werden bewährte hydraulische Komponenten und Bauteile verwendet, die allgemein in hohen Stückzahlen laufen und damit kostengünstig beschaffbar sind. Es werden mitunter weniger Bauteile als bei gleichwertigen herkömmlichen hydraulischen Versorgungsprioritätssystemen verwendet, wodurch sich weniger Fehlerquellen ergeben und ein allgemein robusteres Design entsteht. Durch eine geringere Anzahl von Bauteilen kann die hydraulische Anordnung in einem einfach ausgebildeten Ventilblock und damit kostengünstig gestaltet werden. Durch das einfache Verschließen, beispielsweise mittels eines Verschlussstopfens im gemeinsamen Prioritätsventil, werden insgesamt weniger Optionskomponenten benötigt und damit die Teilevielfalt gering gehalten, was sich vorteilhaft auf Logistik und Handhabung in der Produktion derartiger hydraulischer Anordnungen auswirkt. Unter normalen Versorgungsbedingungen für die hydraulische Anordnung kann ein von der Hydraulikpumpe geförderter Volumenstrom über das gemeinsame Prioritätsventil zu dem ersten und wahlweise zweiten Verbraucher und über das weitere Prioritätsventil zu dem dritten hydraulischen Verbraucher gelangen. Im Falle einer Unterversorgung des Gesamtsystems schließt sich das weitere Prioritätsventil aufgrund einer Ansteuerung durch Lastdruckleitungen und unterbindet bzw. reduziert einen durch das weitere Prioritätsventil zu dem dritten hydraulischen Verbraucher strömenden Volumenstrom, so dass ein größerer Volumenstrom den über das gemeinsame Prioritätsventil ansteuerbaren hydraulischen Verbrauchern zugute kommt. Der erste und wahlweise zweite hydraulische Verbraucher wird somit unabhängig von der Stellung des weiteren Prioritätsventils weiterhin hydraulisch versorgt. Es findet also bei einer Unterversorgung des Gesamtsystems eine Mindestversorgung des ersten und wahlweise zweiten hydraulischen Verbrauchers statt, wodurch ein Druckaufbau für den ersten und wahlweise zweiten hydraulischen Verbraucher ermöglicht wird. Der dritte hydraulische Verbraucher wird mit zunehmender Schließung des weiteren Prioritätsventils mit immer weniger Volumenstrom versorgt, hingegen der erste und wahlweise zweite hydraulische Verbraucher weiterhin mit maximalem Volumenstrom versorgt werden. Dem ersten und wahlweise zweiten hydraulischen Verbraucher wird somit eine höhere Versorgungspriorität eingeräumt. Eine weitere lastdruckabhängige Ansteuerung des gemeinsamen Prioritätsventils stellt sicher, dass dem ersten hydraulischen Verbraucher gegenüber dem wahlweise zweiten hydraulischen Verbraucher eine höhere Versorgungspriorität zukommt, wobei der wahlweise zweite hydraulische Verbraucher eine gegenüber dem dritten hydraulischen Verbraucher höhere Versorgungspriorität beibehält. Es werden somit drei Prioritätsstufen realisiert.

Das gemeinsame lastdruckgesteuerte Prioritätsventil kann als 3/2-Wege Proportionalventil ausgebildet sein und stellt eine lastdruckgesteuerte bzw. steuerdruckabhängige Druckwaage dar. Es kann auch eine andere Art von Proportionalventil vorgesehen sein, solange es über wenigstens zwei Ausgänge verfügt und ausgangsseitig mit der Versorgungsleitung des ersten Verbrauchers und mit der Versorgungsleitung des wahlweise zweiten Verbrauchers verbindbar ist. Das gemeinsame Prioritätsventil ist zum einen über eine mit einer Lastdruckleitung des ersten Verbrauchers verbundenen Steuerdruckleitung und zum anderen über eine mit der Versorgungsleitung des ersten Verbrauchers verbundenen Steuerdruckleitung ansteuerbar, wobei erstere Steuerdruckleitung das gemeinsame Prioritätsventil in Richtung einer Schließstellung für den Ausgang des wahlweise zweiten hydraulischen Verbrauchers ansteuert. Die mit der Versorgungsleitung des ersten hydraulischen Verbrauchers verbundene Steuerdruckleitung hingegen steuert das gemeinsame Prioritätsventil in Richtung eine Öffnungsstellung für den Ausgang des wahlweise zweiten hydraulischen Verbrauchers.

Die erste Lastdruckleitung ist über ein erstes Wechselventil mit der Lastdruckleitung des dritten hydraulischen Verbrauchers und mit der zweiten Lastdruckleitung verbunden, wobei die zweite Lastdruckleitung mit dem ersten und dem wahlweise zweiten hydraulischen Verbraucher verbunden ist. Das Wechselventil ist dabei derart angeordnet, dass die erste Lastdruckleitung ausgangsseitig angeschlossen ist. Je nach Versorgungszustand der hydraulischen Anordnung kann somit die über die erste Lastdruckleitung angesteuerte Hydraulikpumpe über den Lastdruck, der in der Lastdruckleitung des dritten Verbrauchers, oder über den Lastdruck, der in der zweiten Lastdruckleitung herrscht, angesteuert werden.

Die zweite Lastdruckleitung ist mit einer Lastdruckleitung des wenigstens einen ersten Verbrauchers verbunden, so dass je nach Versorgungszustand und Auslastung der hydraulischen Anordnung eine Ansteuerung der Hydraulikpumpe auch in Abhängigkeit des Lastdrucks des ersten Verbrauchers erfolgen kann.

Ferner ist die zweite Lastdruckleitung auch mit einer Lastdruckleitung des wahlweise zweiten Verbrauchers verbunden, sofern ein zweiter hydraulischer Verbraucher zum Einsatz kommt, was optional also wahlweise vorgesehen sein kann. In einem solchen Fall ist die zweite Lastdruckleitung über ein zweites Wechselventil mit den Lastdruckleitungen des wenigstens ersten und des wahlweise zweiten Verbrauchers verbunden, wobei das Wechselventil ausgangsseitig mit der zweiten Lastdruckleitung verbunden ist. Je nach Versorgungszustand der hydraulischen Anordnung kann somit die über die erste Lastdruckleitung angesteuerte Hydraulikpumpe über den Lastdruck, der in der Lastdruckleitung des dritten hydraulischen Verbrauchers, der in der Lastdruckleitung des wahlweise zweiten hydraulischen Verbrauchers oder der in der Lastdruckleitung des ersten hydraulischen Verbrauchers herrscht, angesteuert werden.

Das weitere Prioritätsventil, über welches ein Volumenstrom zum dritten hydraulischen Verbraucher steuerbar ist, kann als 2/2-Wege Proportionalventil in Form einer Druckwaage ausgebildet sein, welches ausgangsseitig mit der Versorgungsleitung des dritten Verbrauchers verbunden ist, wobei das weitere Prioritätsventil zum einen über eine mit der zweiten Lastdruckleitung verbundenen Steuerdruckleitung und zum anderen mit einer hydraulikpumpenseitig mit der Versorgungsleitung des dritten Verbrauchers verbundenen Steuerdruckleitung ansteuerbar ist. Die mit der zweiten Lastdruckleitung verbundene Steuerdruckleitung steuert das Prioritätsventil in Richtung einer Schließstellung für den Ausgang des dritten hydraulischen Verbrauchers an. Die hydraulikpumpenseitig mit der Versorgungsleitung des dritten Verbrauchers verbundene Steuerdruckleitung steuert hingegen in Richtung eine Öffnungsstellung. Die als Proportionalventile ausgebildeten Prioritätsventile können neben den genannten zwei Endstellungen (Schließ- bzw. Öffnungsstellungen) Zwischenstellungen einnehmen, in denen sie proportional zu den auf sie wirkenden Steuerdrücken den jeweiligen Ausgang zum hydraulischen Verbraucher entsprechend weiter öffnen oder schließen.

In einer weiteren Ausführungsform kann ein zweiter erster Verbraucher vorgesehen sein, welcher über die Versorgungsleitung für den wenigstens einen ersten Verbraucher mit der Hydraulikpumpe verbindbar ist. Der zweite erste Verbraucher kann über den Ausgang des gemeinsamen Prioritätsventils, der dem einen ersten Verbraucher zugeordnet ist oder alternativ hydraulikpumpenseitig vor dem gemeinsamen Prioritätsventil direkt mit der Versorgungsleitung des wenigstens einen ersten Verbrauchers verbunden sein. Der zweite erste Verbraucher besitzt somit dieselbe Versorgungspriorität wie der eine erste hydraulische Verbraucher. Es ist eine weitere Lastdruckleitung vorgesehen, welche über ein drittes Wechselventil, zusammen mit der Lastdruckleitung des einen ersten Verbrauchers, mit der zweiten Lastdruckleitung verbunden ist, wobei die Verbindung zur zweiten Lastdruckleitung ausgangsseitig des dritten Wechselventils angeordnet ist, so dass in der zweiten Lastdruckleitung zusätzlich zu dem oben Genannten sowohl der Lastdruck des einen ersten Verbrauchers als auch der des zweiten ersten Verbrauchers herrschen kann und die Hydraulikpumpe entsprechend ansteuerbar ist. Insgesamt kann somit je nach Versorgungszustand der hydraulischen Anordnung die Hydraulikpumpe über den Lastdruck, der in der Lastdruckleitung des dritten hydraulischen Verbrauchers, der in der Lastdruckleitung des wahlweise zweiten hydraulischen Verbrauchers, der in der Lastdruckleitung des einen ersten hydraulischen Verbrauchers oder der in der Lastdruckleitung des zweiten ersten hydraulischen Verbrauchers wirkt, angesteuert werden, wobei letztere beiden hydraulischen Verbraucher dieselbe Versorgungspriorität besitzen.

Die Hydraulikpumpe kann als lastdruckabhängige Verstellpumpe ausgebildet sein, die über einen vorzugsweise integrierten Fördervolumenstromregler in Abhängigkeit des von den hydraulischen Verbrauchern gemeldeten Lastdrucksignals einen variablen Volumenstrom liefert, wobei vorzugsweise ein entsprechend der ersten Lastdruckleitung resultierender Steuerdruck zur Regelung der Verstellpumpe heranziehbar ist.

In einer alternativen Ausführungsform kann an Stelle der Verstellpumpe auch eine Konstantpumpe als Hydraulikpumpe verwendet werden, wobei dann ein lastdruckabhängig ansteuerbares Proportionalventil vorgesehen ist, durch welches überschüssige von der Konstantpumpe geförderte Versorgungsflüssigkeit zum Hydrauliktank abführt. Über die erste Lastdruckleitung wird auch hier die erforderliche Versorgungsmenge für die hydraulischen Verbraucher signalisiert und in Abhängigkeit dessen über das Proportionalventil ein entsprechender Anteil des von der Konstantpumpe geförderten konstanten Volumenstroms in den Hydrauliktank abgeführt. Dadurch kann den hydraulischen Verbrauchern ein lastdruckabhängiges Fördervolumen auf vergleichbare Weise wie mit einer Verstellpumpe bereitgestellt werden.

Der wenigstens eine erste hydraulische Verbraucher kann beispielsweise eine hydraulisch betätigbare Lenkung oder eine hydraulisch betätigbare Bremse umfassen. Es ist ferner auch möglich noch andere hydraulische Verbraucher als wenigstens einen ersten Verbraucher mit höchster Prioritätsstufe zu betreiben, beispielsweise ein hydraulisch betätigtes Getriebe.

Ferner kann auch beides zusammen in der gleichen (höchsten) Versorgungsprioritätsstufe mit einem zweiten ersten hydraulischen Verbraucher vorgesehen sein. Es ist ferner auch möglich, noch andere hydraulische Verbraucher als weitere erste Verbraucher mit höchster Prioritätsstufe zu betreiben, beispielsweise ein hydraulisch betätigtes Getriebe.
Ein zweiter hydraulischer Verbraucher kann beispielsweise eine hydraulisch betätigbare Federung umfassen, wobei diese beispielsweise eine Kabinenfederung oder aber auch eine Achsfederung des Fahrzeugs sein kann. Ferner können auch andere hydraulische Verbraucher als zweiter Verbraucher mit untergeordneter Prioritätsstufe betrieben werden, insbesondere die oben Genannten.

Ein dritter hydraulischer Verbraucher kann beispielsweise ein hydraulisch betätigbares Hubwerk umfassen, beispielsweise mit einer vorn oder hinten am Fahrzeug angeordneten Dreipunktanhängevorrichtung, oder einem am Fahrzeug montierten Frontlader. Es ist ferner denkbar die oben Genannten als auch noch weitere andere hydraulische Verbraucher in den verschiedenen genannten Versorgungsprioritätsstufen zu betreiben, insbesondere untereinander auszutauschen.

Um zu verhindern, dass in der ersten Lastdruckleitung ein Einspannen des Steuerdrucks für die Hydraulikpumpe eintritt, kann ferner eine Drosseleinrichtung vorgesehen ist, welche die erste Lastdruckleitung mit dem Hydrauliktank verbindet. Die vorgesehene Drosseleinrichtung, über welche die erste Lastdruckleitung mit dem Hydrauliktank verbunden ist, kann beispielsweise eine konstante Drossel oder Blende bzw. ein Blendenventil umfassen. Hierbei kann auch ein variables bzw. manuell oder elektronisch verstellbares oder ansteuerbares Blendenventil bzw. Stromregelventil oder Drosselregelventil zum Einsatz kommen. Es können auch andere hier nicht genannte Mittel zur Reduzierung des Volumenstroms eingesetzt werden. Wesentlich ist, dass ein minimal zugelassener Volumenstrom voreinstellbar oder regelbar bzw. steuerbar vorgegeben werden kann.
Um zu verhindern, dass das erste Wechselventil den Ausgang des dritten hydraulischen Verbrauchers völlig schließt, können die Lastdruckleitungen des wenigstens einen und/oder zweiten ersten und des wahlweise zweiten Verbrauchers über ein Druckbegrenzungsventil mit dem Hydrauliktank verbunden sein, wodurch eine Druckbegrenzung für die Lastdruckleitungen erfolgt.

Eine erfindungsgemäße hydraulische Anordnung gemäß den oben angeführten Ausgestaltungen eignet sich für den Einsatz in landwirtschaftlichen Fahrzeugen, beispielsweise landwirtschaftlichen Schleppern oder Traktoren, aber auch in Erntemaschinen, sowie Bau- und Forstmaschinen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Seitenansicht eines landwirtschaftlichen Fahrzeugs mit einer erfindungsgemäßen hydraulischen Anordnung,
- Fig. 2: einen schematischen Hydraulikschaltplan einer erfindungsgemäßen hydraulischen Anordnung mit zwei hydraulischen Verbrauchern unterschiedlicher Versorgungspriorität,
- Fig. 3: einen schematischen Hydraulikschaltplan einer erfindungsgemäßen hydraulischen Anordnung mit drei hydraulischen Verbrauchern unterschiedlicher Versorgungspriorität,
- Fig. 4: einen schematischen Hydraulikschaltplan einer erfindungsgemäßen hydraulischen Anordnung mit vier hydraulischen Verbrauchern mit gleicher und unterschiedlicher Versorgungspriorität und
- Fig. 5: einen schematischen Hydraulikschaltplan einer hydraulischen Anordnung mit einer Konstantpumpe.

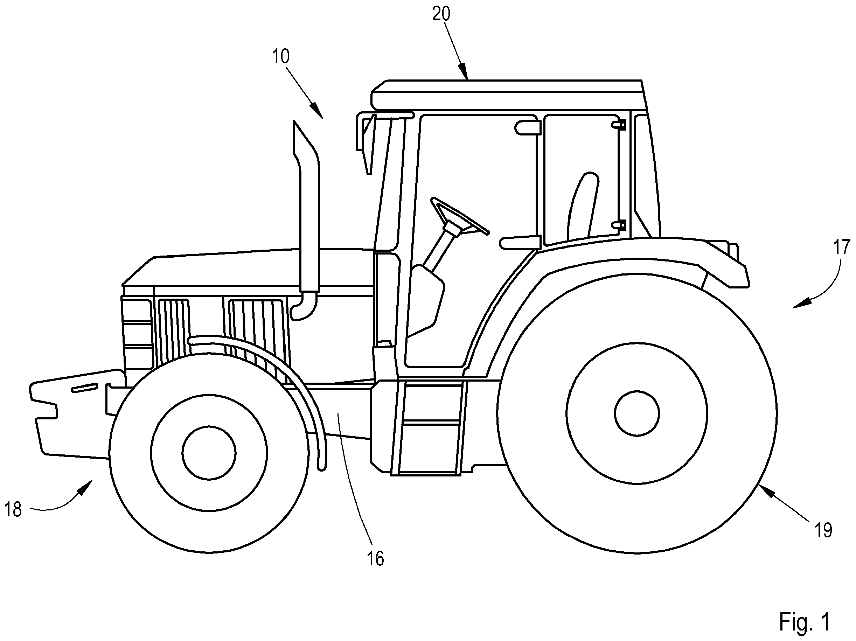

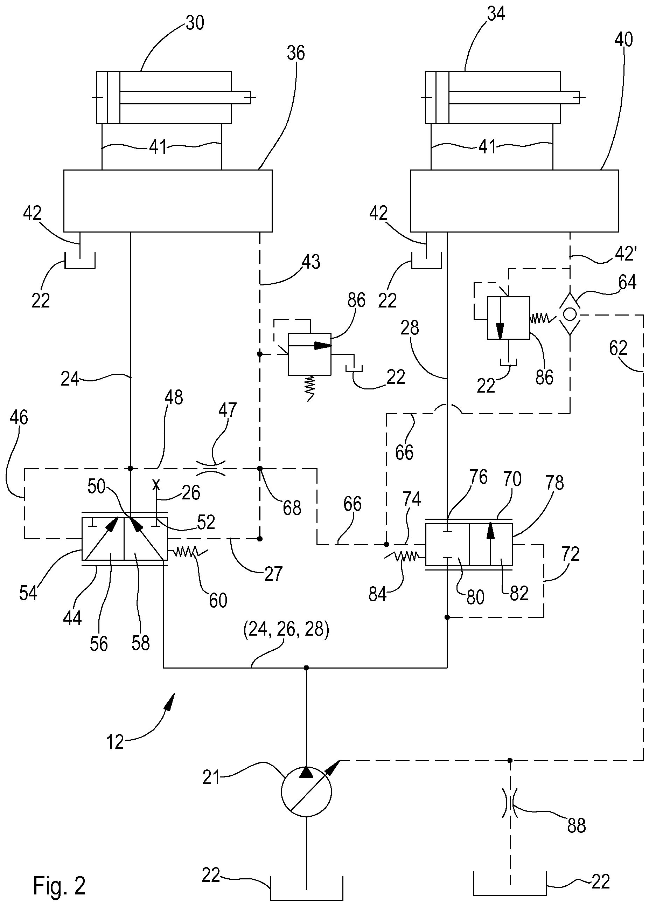

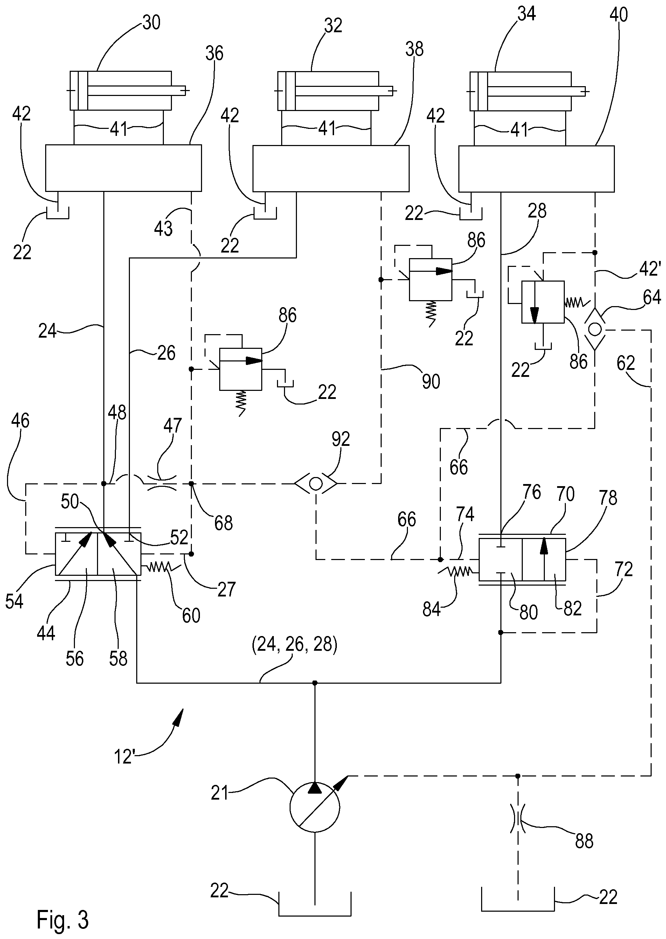

Figur 1 zeigt ein landwirtschaftliches Fahrzeug 10 in Form eines Traktors oder Schleppers, der eine erfindungsgemäße hydraulische Anordnung 12 gemäß den Figuren 2 bis 4 umfasst. Die in den Figuren 2 und 3 schematisch dargestellten hydraulischen Anordnungen sind nur beispielhaft in Verbindung mit dem Traktor beschrieben und können in gleicher Weise auch in anderen landwirtschaftlichen Fahrzeugen, wie Erntemaschinen, Pflanzenschutzmaschinen, Pflanz- und Sämaschinen aber auch in Bau- und Forstmaschinen Anwendung finden.

Das Fahrzeug 10 umfasst einen Rahmen 16, an dem beispielsweise an einem hinteren Bereich 17 eine Dreipunktanhängevorrichtung (nicht gezeigt) mit Hubwerk zum Betreiben von Anbau- oder Arbeitsgeräten (nicht gezeigt) angeordnet ist. Die Dreipunktanhängevorrichtung kann in gleicher Weise auch an einem vorderen Bereich des Fahrzeugs 10 angeordnet sein. Das an der Dreipunktanhängevorrichtung angeordnete Hubwerk wird als ein von mehreren am Fahrzeug 10 befindlichen hydraulischen Verbrauchern über die hydraulische Anordnung 12 versorgt. Die in den Figuren 2 bis 4 dargestellten hydraulischen Anordnungen 12 können ferner auch hydraulisch betriebene Geräte am Fahrzeug 10 versorgen, die hier nicht im Einzelnen genannte werden. Beispielhaft soll hier nur ein Frontlader oder ein mittels Zugstange gezogenes hydraulisch betriebenes Arbeitsgerät genannt werden.

Das Fahrzeug 10 verfügt ferner über eine hydraulisch betriebene Lenkung und Bremsanlage (beides nicht gezeigt) sowie über ein hydraulisch betriebenes Federungssystem an Vorderachse 18, Hinterachse 19 und/oder Kabine 20.

Gemäß Figur 2 wird eine erfindungsgemäße Ausführungsform für nur zwei hydraulische Verbraucher mit unterschiedlichen Versorgungsprioritäten dargestellt. Die hydraulische Anordnung 12 gemäß Figur 2 umfasst eine Hydraulikpumpe 21 in Form einer variablen Verstellpumpe und ein Hydraulikreservoir 22 in Form eines Hydrauliktanks mit Hydraulikflüssigkeit.

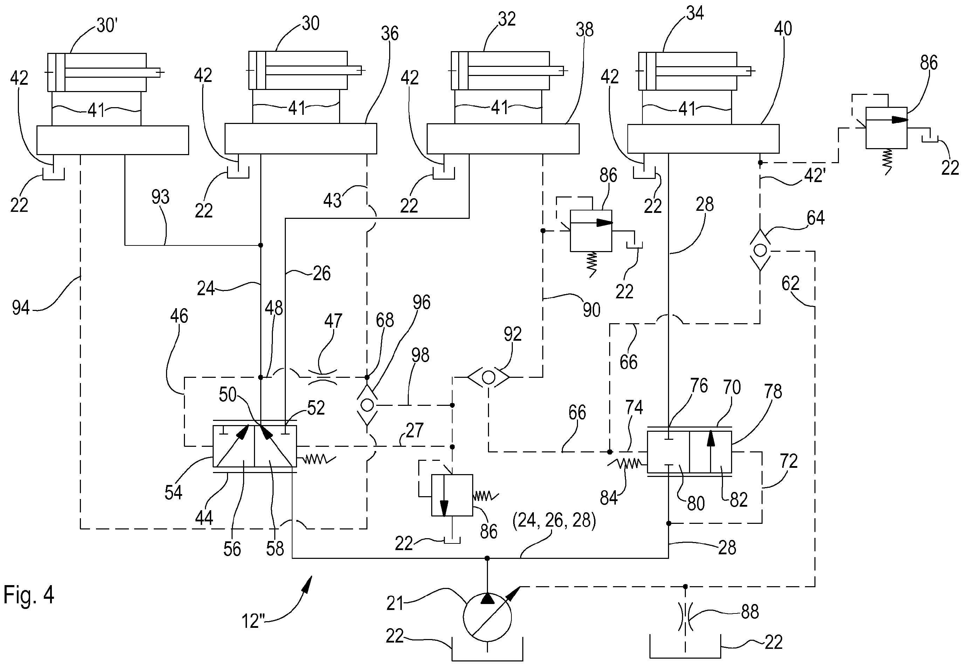

Die hydraulische Anordnung 12 umfasst ferner eine mit der Hydraulikpumpe 21 verbundene erste, zweite und dritte hydraulische Versorgungsleitung 24, 26, 28 die wenigstens einen ersten, wahlweise zweiten und dritten hydraulischen Verbraucher 30, 32, 34 hydraulisch versorgen, wobei die Versorgungsleitung 26 für den wahlweise zweiten hydraulischen Verbraucher 32 (siehe Figuren 3 und 4) in Figur 2 zwar exemplarisch vorgesehen, jedoch verschlossen dargestellt ist und erst in den in den Figuren 3 und 4 dargestellten Ausführungsbeispielen Funktionsbestandteil wird, da bei dem in Figur 2 dargestellten Ausführungsbeispiel kein wahlweise zweiter hydraulischer Verbraucher 32 vorgesehen ist. Die hydraulischen Verbraucher 30, 32, 34 werden über ein erstes, zweites und drittes Steuerventil 36, 38, 40 angesteuert (sieh Figuren 3 und 4 für Steuerventil 38 für wahlweise zweiten Verbraucher 32). Die Steuerventile 36, 38, 40 sind jeweils über eine der Versorgungsleitungen 24, 26, 28 mit der Hydraulikpumpe 21 und über mehrere verschiedene Verbindungsleitungen 41 mit dem jeweiligen hydraulischen Verbraucher 30, 32, 34, sowie über Tankleitungen 42 mit dem Hydrauliktank 22 verbunden. Der eine erste hydraulische Verbraucher 30 wird demnach über die erste Versorgungsleitung 24 versorgt und über das Steuerventil 36 angesteuert. Der dritte hydraulische Verbraucher 34 wird demnach über die Versorgungsleitung 28 versorgt und über das Steuerventil 40 angesteuert.

Bei jedem der hydraulischen Verbraucher 30, 32, 34 kann es sich um mehr als nur einen hydraulischen Verbraucher handeln, so dass beispielsweise der erste hydraulische Verbraucher 30 eine hydraulisch betriebene Lenkung (nicht gezeigt) und/oder Bremsanlage (nicht gezeigt) des Fahrzeugs 10 darstellen kann. Die hydraulischen Verbraucher können jedoch auch in allen dargestellten Beispielen sowohl eine hydraulisch betriebene Federung (nicht gezeigt) des Fahrzeugrahmens 16 and der Vorderachse 18 und/oder an der Hinterachse 19 und/oder auch eine hydraulische Federung (nicht gezeigt) der Kabine 20, als auch als Hubwerk einer Dreipunkanhängevorrichtung (nicht gezeigt) oder eines Frontladers. Hierbei können die hydraulischen Verbraucher 30, 32, 34 auch andere nicht genannte hydraulische Verbraucher darstellen sowie in anderer beliebiger Reihenfolge mit beliebiger Versorgungspriorität ausgebildet sein.

Das erste Steuerventil 36 weist eine Lastdruckleitung 43 auf, die als Steuerdruckleitung 27 in ein als 3/2-Wegeventil ausgebildetes Proportionalventil 44 mündet, welches ein für den ersten und wahlweise zweiten hydraulischen Verbraucher gemeinsames Prioritätsventil 44 darstellt. Von der entgegen gesetzten Steuerdruckseite des gemeinsamen Prioritätsventils 44 erstreckt sich eine Steuerdruckleitung 46, die in die Versorgungsleitung 24 mündet, wobei ferner eine mit einer Drossel oder Blende 47 versehene Lastdruckverbindungsleitung 48 vorgesehen ist, die sich zwischen der Versorgungsleitung 24 und der Lastdruckleitung 43 erstreckt. Das gemeinsame Prioritätsventil 44 weist zwei Ausgänge 50, 52 auf, deren Öffnungsquerschnitte je nach Lastdruck gesteuertes Bewegen (durch die Steuerdruckleitungen 43, 46) eines Ventilschiebers 54 mit entsprechenden Ventilschieberstellung 56, 58, erweitert bzw. verringert, also geöffnet bzw. geschlossen werden, wobei ein durch die Steuerdruckleitung 46 verursachtes Bewegen des Ventilschiebers 54 in Richtung der Ventilschieberstellung 56 den Öffnungsquerschnitt des Ausgangs 50 schließt bzw. den des Ausgangs 52 öffnet und ein durch die Steuerdruckleitung 43 verursachtes Bewegen des Ventilschiebers 54 in Richtung der Ventilschieberstellung 58 den Öffnungsquerschnitt des Ausgangs 50 öffnet bzw. den des Ausgangs 52 schließt. Ferner ist das gemeinsame Prioritätsventil 44 mit einer Feder 60 vorgespannt, welche den Ventilschieber in die zuletzt genannte Ventilschieberstellung 58 drängt, so dass bei eventuellem Steuerdruckverlust bzw. Steuerdruckausfall eine Versorgung des wenigstens einen ersten hydraulischen Verbrauchers 30 gesichert ist.

Ausgehend von der Hydraulikpumpe 21 erstreckt sich eine für die Hydraulikpumpe 21 als Steuerdruckleitung ausgebildete erste Lastdruckleitung 62, die ausgangsseitig eines ersten Wechselventils 64 mündet. Das erste Wechselventil 64 ist eingangsseitig mit einer Lastdruckleitung 42' des dritten hydraulischen Verbrauchers 34 sowie mit einer zweiten Lastdruckleitung 66 verbunden. Die zweite Lastdruckleitung 66 wiederum mündet in eine Verbindung 68 mit der Lastdruckleitung 43 des wenigstens einen hydraulischen Verbrauchers 30.

Für die hydraulische Versorgungssteuerung des dritten hydraulischen Verbrauchers 34 ist ein weiteres Prioritätsventil 70 vorgesehen, welches als 2/2-Wege Proportionalventil ausgebildet ist. Eine Steuerdruckleitung 72 ist hydraulikpumpenseitig mit der Versorgungsleitung 28 verbunden. Von der entgegen gesetzten Steuerdruckseite des weiteren Prioritätsventils 70 erstreckt sich eine Steuerdruckleitung 74, die in Verbindung mit der zweiten Lastdruckleitung 66 steht. Das weitere Prioritätsventil 70 weist einen Ausgang 76 auf, dessen Öffnungsquerschnitt je nach Lastdruck gesteuertes Bewegen (durch die Steuerdruckleitungen 72, 74) eines Ventilschiebers 78 mit entsprechender Ventilschieberstellung 80, 82 erweitert bzw. verringert, also geöffnet bzw. geschlossen wird, wobei ein durch die Steuerdruckleitung 74 verursachtes Bewegen des Ventilschiebers 78 in Richtung der Ventilschieberstellung 80 den Öffnungsquerschnitt des Ausgangs 76 schließt und ein durch die Steuerdruckleitung 72 verursachtes Bewegen des Ventilschiebers 78 in Richtung der Ventilschieberstellung 82 den Öffnungsquerschnitt des Ausgangs 76 öffnet. Ferner ist das weitere 70 mit einer Feder 84 vorgespannt, welche den Ventilschieber in die zuletzt genannte Ventilschieberstellung 80 drängt, so dass bei eventuellem Steuerdruckverlust bzw. Steuerdruckausfall eine Unterbrechung der Versorgung des dritten hydraulischen Verbrauchers 34 gesichert ist.

Um einen Überdruck in den Lastdruckleitungen 42', 43 zu vermeiden, sind diese vorzugsweise über Druckbegrenzungsventile 86 mit dem Hydrauliktank 22 verbunden.

Ferner ist von der ersten Lastdruckleitung 62 eine mit einer Drossel oder Blende 88 versehene Verbindungsleitung zum Hydrauliktank 22 vorgesehen, um zum einen einen ausreichenden Steuerdruckaufbau für die Hydraulikpumpe 21 in der ersten Lastdruckleitung 62 zu gewährleisten und zum anderen ein Einspannen eines Steuerdrucks für die Hydraulikpumpe 21 in der ersten Lastdruckleitung 62 zu verhindern bzw. einen Steuerdruckabbau bzw. eine Entlastung in der ersten Lastdruckleitung 62 zu ermöglichen. Diese Anordnung zum Steuerdruckabbau bzw. zur Entlastung ist jedoch bauartbedingt nicht für jede Art von hydraulischen Verbrauchern zwingend erforderlich.

Durch die beschriebene hydraulische Anordnung 12 gemäß Figur 2 wird eine lastdruckgesteuerte hydraulische Anordnung 12 mit integrierter Prioritätssteuerung für hydraulische Verbraucher 30, 34 mit zwei verschiedenen Versorgungsprioritäten geschaffen, wobei ein weiterer hydraulischer Verbraucher 32 mit einer weiteren Versorgungsprioritätsstufe, die der ersten untergeordnet und der dritten übergeordnet ist, nicht angeschlossen ist (Anschluss 52 am ersten Prioritätsventil 44 ist verschlossen). Prioritätssteuerung heißt im vorliegenden Fall, dass die verschiedenen hydraulischen Verbraucher 30, 34 unterschiedlichen Wichtigkeitsstufen bzw. Prioritätsstufen zugeordnet sind und entsprechend ihrer Prioritätsstufe mit einer entsprechenden Versorgungspriorität von der Hydraulikpumpe 21 versorgt werden. Dies bedeutet, dass bei einer Unterversorgung des Gesamtsystems bzw. der hydraulischen Anordnung 12, was betriebsbedingt eintreten kann, die hydraulischen Verbraucher 34 einer geringeren Prioritätsstufe nicht mehr oder nur noch begrenzt hydraulisch versorgt werden, um eine weiterhin vollständige hydraulische Versorgung von hydraulischen Verbrauchern 30 höherer Prioritätsstufe zu gewährleisten.

Ein Ausführungsbeispiel für eine weitere hydraulische Anordnung 12' mit drei hydraulischen Verbrauchern 30, 32, 34 ist in Figur 3 dargestellt, wobei nunmehr der zweite hydraulische Verbraucher 32 wahlweise derart hinzugeschaltet wurde, dass dem ersten hydraulischen Verbraucher 30 eine oberste, dem zweiten hydraulischen Verbraucher 32 eine mittlere und dem dritten hydraulischen Verbraucher 34 die niedrigste Versorgungspriorität zugesprochen wurde. Der wahlweise zweite hydraulische Verbraucher 32 weist eine Lastdruckleitung 90, die über ein zweites Wechselventil 92 mit der Lastdruckleitung 43 des einen ersten hydraulischen Verbrauchers 30 und mit der zweiten Lastdruckleitung 66 verbunden ist, wobei die zweite Lastdruckleitung 66 ausgangsseitig am Wechselventil 92 angeschlossen ist. Ferner ist auch die Lastdruckleitung 90 des wahlweise zweiten hydraulischen Verbrauchers 32 über ein Druckbegrenzungsventil 86 aus den gleichen Gründen wie oben beschrieben mit dem Hydrauliktank 22 verbunden. Im Übrigen gleicht die hydraulische Anordnung 12' aus Figur 3 der hydraulischen Anordnung 12 aus Figur 2.

Ein Ausführungsbeispiel für eine weitere hydraulische Anordnung 12" mit vier hydraulischen Verbrauchern 30, 30', 32, 34 ist in Figur 4 dargestellt, wobei zusätzlich zum wahlweise zweiten hydraulischen Verbraucher 32 ein zweiter (weiterer) erster hydraulischer Verbraucher 30' (als insgesamt vierter hydraulischer Verbraucher) hinzugeschaltet wurde, so dass dem einen ersten hydraulischen Verbraucher 30 und dem zweiten ersten Verbraucher 30' eine oberste, dem wahlweise zweiten hydraulischen Verbraucher 32 eine mittlere und dem dritten hydraulischen Verbraucher 34 die niedrigste Versorgungspriorität zugesprochen wurde. Der zweite erste Verbraucher 30' weist eine an die Versorgungsleitung 24 des einen ersten Verbrauchers 30 gekoppelte Versorgungsleitung 93 sowie eine Lastdruckleitung 94 auf, die über ein drittes Wechselventil 96 mit der Lastdruckleitung 43 des einen ersten hydraulischen Verbrauchers 30 und mit der zweiten Lastdruckleitung 66 verbunden ist, wobei das dritte Wechselventil 96 derart angeordnet ist, dass eine Lastdruckverbindungsleitung 98 ausgangsseitig des dritten Wechselventils 96 zu einem der Eingänge des zweiten Wechselventils 92 geführt. Die Ankopplung der Versorgungsleitung 93 an die Versorgungsleitung 24 kann ausgehend von der Hydraulikpumpe 21 sowohl vor als auch hinter dem gemeinsamen Prioritätsventil 44 erfolgen, wobei in Figur 4 letztere Alternative beispielhaft dargstellt ist. Ferner sind die Lastdruckleitung 43 und 94 gemeinsam über ein Druckbegrenzungsventil 86 aus den gleichen Gründen wie oben beschrieben mit dem Hydrauliktank 22 verbunden. Im Übrigen gleicht die hydraulische Anordnung 12" aus Figur 4 der hydraulischen Anordnung 12' aus Figur 3. Die Erweiterung um einen zweiten ersten hydraulischen Verbraucher 30' kann selbstverständlich auch ausgehend von der hydraulischen Anordnung 12 gemäß Figur 2 erfolgen, wobei dann das zweite Wechselventil 92 entfallen würde. Gleichfalls ist es denkbar, dass auch weitere hydraulische Verbraucher (nicht gezeigt) in den anderen Versorgungsprioritätsstufen hinzugefügt werden, derart, dass ein weiterer wahlweise zweiter oder ein weiterer dritter Verbraucher in analoger Weise, wie oben zum zweiten ersten hydraulischen Verbraucher 30' beschrieben wurde, hinzugefügt werden kann.

Die vorangegangenen Ausführungsbeispiele zeigen, dass eine Erweiterung einer erfindungsgemäßen hydraulischen Anordnung 12 um einen weiteren hydraulischen Verbraucher 32 mit einer weiteren Versorgungsprioritätsstufe (Anordnung 12') sowie eine Erweiterung einer erfindungsgemäßen Anordnung 12 bzw. 12' um einen zweiten (weiteren) ersten hydraulischen Verbraucher 30' mit geringem Montageaufwand und auf einfache Weise durch Hinzufügen/Entfernen von einem Wechselventil (92, 96) bzw. Anschließen/Trennen der entsprechenden Versorgungsleitung (26, 93) erfolgen kann.

In den vorliegenden Ausführungsbeispielen gemäß der Figuren 2, 3 und 4 wurden den hydraulischen Verbrauchern 30, 30', 32, 34 unterschiedliche Versorgungsprioritäten zugesprochen, derart, dass wenn es zu einer betriebsbedingten Unterversorgung der hydraulischen Anordnung 12, 12', 12" kommen sollte, in erster Linie gewährleistet wird, dass der eine erste hydraulische Verbraucher 30 und gegebenenfalls auch der zweite erste hydraulische Verbraucher 30' weiterhin ausreichend versorgt werden und erst dann eine hydraulische Versorgung des zweiten und gegebenenfalls noch des dritten hydraulischen Versorgers 32, 34 erfolgen wird. Dies kann wie folgt aufgrund der beschriebenen Anordnung der Lastdruckleitungen 43, 48, 62, 66, 90, 94, 98 sowie der Wechselventile 64, 92, 96 und der Steuerdruckleitungen 46, 72, 74 in Verbindung mit den Prioritätsventilen 44, 70 erzielt werden.

Unter normalen Versorgungsbedingungen für das Gesamtsystem bzw. für die hydraulischen Anordnungen 12, 12', 12" kann ein von der Hydraulikpumpe 21 geförderter Volumenstrom frei über das durch die Steuerdruckleitung 72 geöffnete weitere Prioritätsventil 70 (in den Figuren 2 bis 4 in Schließstellung dargestellt) zu dem dritten hydraulischen Verbraucher 34 gelangen. Ferner werden der eine erste und gegebenenfalls der zweite erste, sowie der wahlweise zweite hydraulische Verbraucher 30, 30', 32 über das für beide Ausgänge 50, 52 durch die Steuerdruckleitung 27 und die Steuerdruckleitung 46 bzw. Lastdruckverbindungsleitung 48 geöffnete gemeinsame Prioritätsventil 44 versorgt. Im Falle einer Unterversorgung des Gesamtsystems steigt der Lastdruck in den Lastdruckleitungen 66, 90 relativ gesehen an, da ein Versorgungsdruck des Gesamtsystems abfällt, und es erfolgt aufgrund deren Verbindung zur Steuerdruckleitung 74 ein vollständiges bzw. teilweises Schließen des Prioritätsventils 70 (bzw. Druckwaage), wodurch ein Volumenstrom zu dem dritten Verbraucher 34 unterbunden bzw. reduziert (gedrosselt) wird. Gleichzeitig wird der Volumenstrom für den einen ersten und gegebenenfalls zweiten ersten sowie für den wahlweise zweiten hydraulischen Verbraucher 30, 30', 32 weiterhin über das gemeinsame Prioritätsventil 44 gewährleistet. Der eine erste und gegebenenfalls zweite erste sowie der wahlweise zweite hydraulische Verbraucher 30, 30', 32 wird somit unabhängig von der Stellung des weiteren Prioritätsventils 70 weiterhin hydraulisch versorgt, selbst wenn das weitere Prioritätsventil 70 vollständig geschlossen sein sollte, wenn auch mit gedrosseltem Volumenstrom. Es findet also bei einer Unterversorgung des Gesamtsystems eine Mindestversorgung des einen ersten und gegebenenfalls zweiten ersten sowie des wahlweise zweiten hydraulischen Verbraucher 30, 30', 32 statt. Der dritte hydraulische Verbraucher 34 wird mit zunehmender Schließung des weiteren Prioritätsventils 70 mit immer weniger Volumenstrom versorgt, hingegen der eine erste hydraulische Verbraucher 30 und gegebenenfalls auch der zweite erste Verbraucher 30' weiterhin mit maximalem Volumenstrom versorgt wird. Sollte eine Unterversorgung noch größeren Ausmaßes stattfinden, schließt sich aufgrund des ansteigenden Drucks in der Lastdruckleitung 43 bzw. Steuerdruckleitung 27 zunehmend das gemeinsame Prioritätsventil 44 bezüglich seines Ausgangs 52 für den wahlweise zweiten hydraulischen Verbraucher 32, so dass bei einer größeren Unterversorgung nur noch der Ausgang 50 für den einen ersten und gegebenenfalls zweiten ersten hydraulischen Verbraucher geöffnet ist. Die in den Figuren 2 bis 4 dargestellten hydraulischen Verbraucher 30, 30', 32, 34 sind als Hydraulikzylinder dargestellt. Sie sollen jedoch rein exemplarisch eine Vielzahl von möglichen hydraulischen Verbrauchern symbolisieren. So können gleichbedeutend der eine erste Verbraucher 30 und wahlweise zweite erste Verbraucher 30' beispielsweise eine hydraulische Lenkung oder Bremsanlage darstellen, die eine gegenüber einer als weiteren zweiten hydraulischen Verbraucher 32 ausgebildeten hydraulischen Federung für Fahrzeug 10 oder Kabine 20 höhere Versorgungspriorität aufweist. Ferner kann beispielsweise eine als wahlweise zweiter hydraulischer Verbraucher 32 ausgebildete hydraulische Federung für ein Fahrzeug 10 oder eine Kabine 20 gegenüber einem als dritter hydraulischer Verbraucher 34 ausgebildetes Hubwerk eine höhere Versorgungspriorität aufweisen.

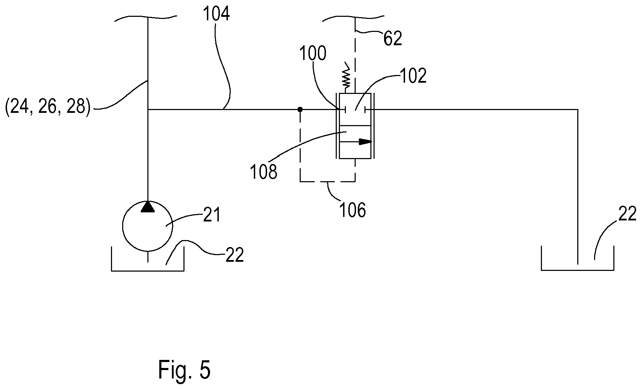

Auch wenn die Erfindung lediglich anhand von nur drei Ausführungsbeispielen beschrieben wurde, erschließen sich für den Fachmann im Lichte der vorstehenden Beschreibung sowie der Zeichnungen viele verschiedenartige Alternativen, Modifikationen und Varianten, die unter die vorliegende Erfindung fallen. So kann beispielsweise gemäß Figur 5 an Stelle der variablen Verstellpumpe eine Konstantpumpe als Hydraulikpumpe 21 angeordnet werden, wobei eine lastdruckabhängige, bedarfsgesteuerte hydraulische Anordnung 12, 12', 12" gemäß Figur 2 bis 4 dann über ein weiteres druckgesteuertes Proportionalventil 100 realisierbar ist, welches von der ersten Lastdruckleitung 62 druckgesteuert in eine Schließstellung 102 und durch eine mit einer Abführleitung 104 verbundene Steuerdruckleitung 106 in eine Öffnungsstellung 108 gedrängt wird. Die Abführleitung 104 ist mit dem Fördervolumenstrom der als Konstantpumpe ausgebildten Hydraulikpumpe 21 verbunden und reduziert durch Abführen von überschüssiger Versorgungsflüssigkeit (von der Hydraulikpumpe 21 geförderte Hydraulikflüssigkeit), die durch die Konstantpumpe konstant an die Versorgungsleitungen 24, 26, 28 gefördert wird, das Fördervolumen entsprechend dem von der ersten Lastdruckleitung 62 gelieferten Lastdrucksignal. Somit kann auch mittels einer als Konstantpumpe ausgebildeten Hydraulikpumpe 21 eine bedarfsgesteuerte bzw. lastdruckabhängige Versorgung der hydraulischen Verbraucher 30, 30', 32, 34 erfolgen.

## Patentansprüche

1. Hydraulische Anordnung (12, 12', 12") zur Steuerung der Versorgungsprioritäten mehrerer hydraulischer Verbraucher (30, 30', 32, 34), mit einer Hydraulikpumpe (21) und einem Hydrauliktank (22), einem ersten hydraulischen Verbraucher (30, 30') mit einer Versorgungspriorität erster Stufe, einem zweiten hydraulischen Verbraucher (32) mit einer der ersten Stufe untergeordneten Versorgungspriorität zweiter Stufe und einem dritten hydraulischen Verbraucher (34) mit einer der zweiten Stufe untergeordneten Versorgungspriorität dritter Stufe, wobei jeder Verbraucher (30, 30', 32, 34) über eine eigene Versorgungsleitung (24, 26, 28) hydraulisch mit der Hydraulikpumpe (21) verbindbar ist, wobei die Versorgungsleitungen (24, 26) für den ersten und den zweiten Verbraucher (30, 32) über ein gemeinsames lastdruckgesteuertes Prioritätsventil (44) und die Versorgungsleitung (28) für den dritten Verbraucher (34) über ein weiteres lastdruckgesteuertes Prioritätsventil (70) mit der Hydraulikpumpe (21) verbindbar sind und eine zur Hydraulikpumpe (21) führende erste Lastdruckleitung (62) mit einer Lastdruckleitung (42') des dritten hydraulischen Verbrauchers (34) und mit einer zweiten Lastdruckleitung (66) verbunden ist.

2. Hydraulische Anordnung (12, 12', 12") nach Anspruch 1, **dadurch gekennzeichnet, dass** das gemeinsame lastdruckgesteuerte Prioritätsventil (44) als 3/2-Wege Proportionalventil ausgebildet ist, welches ausgangsseitig mit der Versorgungsleitung (24) des ersten Verbrauchers (30, 30') und mit der Versorgungsleitung (26) des zweiten Verbrauchers (32) verbindbar ist, wobei das gemeinsame Prioritätsventil (44) zum einen über eine mit einer Lastdruckleitung (43) des ersten Verbrauchers (30, 30') verbundenen Steuerdruckleitung (27) und zum anderen über eine mit der Versorgungsleitung (24) des ersten Verbrauchers (30) verbundenen Steuerdruckleitung (46) ansteuerbar ist.

3. Hydraulische Anordnung (12, 12', 12") nach Anspruch 1 oder 2, **dadurch gekennzeichnet, dass** die erste Lastdruckleitung (62) über ein erstes Wechselventil (64) mit der Lastdruckleitung (42') des dritten hydraulischen Verbrauchers (34) und mit der zweiten Lastdruckleitung (66) verbunden ist, wobei die zweite Lastdruckleitung (66) mit dem ersten und dem zweiten hydraulischen Verbraucher (30, 30', 32) verbunden ist.

4. Hydraulische Anordnung (12, 12', 12") nach einem der Ansprüche 1 bis 3, **dadurch gekennzeichnet, dass** die zweite Lastdruckleitung (66) mit einer Lastdruckleitung (43) des ersten Verbrauchers (30, 30') verbunden ist.

5. Hydraulische Anordnung (12, 12', 12") nach einem der Ansprüche 1 bis 4, **dadurch gekennzeichnet, dass** die zweite Lastdruckleitung (66) mit einer Lastdruckleitung (90) des zweiten Verbrauchers (32) verbunden ist, wobei die zweite Lastdruckleitung (90) über ein zweites Wechselventil (92) mit den Lastdruckleitungen (43, 90, 94) des ersten und des zweiten Verbrauchers (30, 30', 32) verbunden ist.

6. Hydraulische Anordnung (12, 12', 12") nach einem der Ansprüche 1 bis 5, **dadurch gekennzeichnet, dass** das weitere Prioritätsventil (70) als 2/2-Wege Proportionalventil ausgebildet ist, welches ausgangsseitig mit der Versorgungsleitung (28) des dritten Verbrauchers (34) verbunden ist, wobei das weitere Prioritätsventil (70) zum einen über eine mit der zweiten Lastdruckleitung (66) verbundenen Steuerdruckleitung (74) und zum anderen mit einer hydraulikpumpenseitig mit der Versorgungsleitung (28) des dritten Verbrauchers (34) verbundenen Steuerdruckleitung (72) ansteuerbar ist.

7. Hydraulische Anordnung (12, 12', 12") nach einem der Ansprüche 1 bis 6, **dadurch gekennzeichnet, dass** ein zweiter erster Verbraucher (30') vorgesehen ist, welcher über die Versorgungsleitung (24) für den ersten Verbraucher (30) mit der Hydraulikpumpe (21) verbindbar ist und eine weitere Lastdruckleitung (94) aufweist, welche über ein drittes Wechselventil (96), zusammen mit der Lastdruckleitung (43) des einen ersten Verbrauchers, (30) mit der zweiten Lastdruckleitung (66) verbunden ist.

8. Hydraulische Anordnung (12, 12', 12") nach einem der Ansprüche 1 bis 7, **dadurch gekennzeichnet, dass** die Hydraulikpumpe (21) als lastdruckabhängige Verstellpumpe ausgebildet ist.

9. Hydraulische Anordnung (12, 12', 12") nach einem der Ansprüche 1 bis 8, **dadurch gekennzeichnet, dass** die Hydraulikpumpe (21) als Konstantpumpe ausgebildet und ein weiteres lastdruckabhängig ansteuerbares Proportionalventil (100) vorgesehen ist, welches lastdruckabhängig von der Konstantpumpe geförderte Versorgungsflüssigkeit zum Hydrauliktank (22) abführt.

10. Hydraulische Anordnung (12, 12', 12") nach einem der Ansprüche 1 bis 9, **dadurch gekennzeichnet, dass** der erste Verbraucher (30, 30') eine hydraulisch betätigbare Lenkung und/oder hydraulisch betätigbare Bremse umfasst.

11. Hydraulische Anordnung (12, 12', 12") nach einem der Ansprüche 7 bis 10, **dadurch gekennzeichnet, dass** der zweite erste Verbraucher (30') eine hydraulisch betätigbare Lenkung und/oder hydraulisch betätigbare Bremse umfasst.

12. Hydraulische Anordnung (12, 12', 12") nach einem der Ansprüche 1 bis 11, **dadurch gekennzeichnet, dass** der zweite oder der dritte Verbraucher (32, 34) eine hydraulisch betätigbare Federung oder ein hydraulisch betätigbares Hubwerk umfasst.

13. Hydraulische Anordnung (12, 12', 12") nach einem der Ansprüche 1 bis 12, **dadurch gekennzeichnet, dass** ferner eine Drosseleinrichtung (88) vorgesehen ist, welche die erste Lastdruckleitung (62) mit dem Hydrauliktank (22) verbindet.

14. Hydraulische Anordnung (12, 12', 12") nach einem der Ansprüche 1 bis 13, **dadurch gekennzeichnet, dass** die Lastdruckleitung (42', 43, 90, 94) des einen und/oder zweiten ersten und/oder des zweiten Verbrauchers (30, 30', 32) über ein Druckbegrenzungsventil (86) mit dem Hydrauliktank (22) verbunden ist.

15. Landwirtschaftliches Fahrzeug(10) mit einer hydraulischen Anordnung (12, 12', 12") nach einem der vorhergehenden Ansprüche.

## Claims

1. Hydraulic assembly (12, 12', 12") for controlling the supply priorities of a plurality of hydraulic consumers (30, 30', 32, 34), having a hydraulic pump (21) and a hydraulic tank (22), with a first hydraulic consumer (30, 30') with a first-level supply priority, a second hydraulic consumer (32) with a second-level supply priority which is subordinate to the first level, and a third hydraulic consumer (34) with a third-level supply priority which is subordinate to the second level, wherein each consumer (30, 30', 32, 34) can be hydraulically connected to the hydraulic pump (21) via a separate supply line (24, 26, 28), wherein the supply lines (24, 26) for the first and the second consumer (30, 32) can be connected to the hydraulic pump (21) via a common load-pressure-controlled priority valve (44), and the supply line (28) for the third consumer (34) can be connected to the hydraulic pump (21) via a further load-pressure-controlled priority valve (70), and a first load pressure line (62) which leads to the hydraulic pump (21) is connected to a load pressure line (42') of the third hydraulic consumer (34) and to a second load pressure line (66).

2. Hydraulic arrangement (12, 12', 12") according to Claim 1, **characterized in that** the common load-pressure-controlled priority valve (44) is embodied as a 3/2-way proportional valve which can be connected on the output side to the supply line (24) of the first consumer (30, 30') and to the supply line (26) of the second consumer (32), wherein the common priority valve (44) can be actuated, on the one hand, via a control pressure line (27) which is connected to a load pressure line (43) of the first consumer (30, 30'), and, on the other hand, via a control pressure line (46) which is connected to the supply line (24) of the first consumer (30).

3. Hydraulic assembly (12, 12', 12") according to Claim 1 or 2, **characterized in that** the first load pressure line (62) is connected via a first shuttle valve (64) to the load pressure line (42') of the third hydraulic consumer (34) and to the second load pressure line (66), wherein the second load pressure line (66) is connected to the first and the second hydraulic consumer (30, 30', 32).

4. Hydraulic assembly (12, 12', 12") according to one of Claims 1 to 3, **characterized in that** the second load pressure line (66) is connected to a load pressure line (43) of the first consumer (30, 30').

5. Hydraulic assembly (12, 12', 12") according to one of Claims 1 to 4, **characterized in that** the second load pressure line (66) is connected to a load pressure line (90) of the second consumer (32), wherein the second load pressure line (90) is connected via a second shuttle valve (92) to the load pressure lines (43, 90, 94) of the first and the second consumer (30, 30', 32).

6. Hydraulic assembly (12, 12', 12") according to one of Claims 1 to 5, **characterized in that** the further priority valve (70) is embodied as a 2/2-way proportional valve which is connected on the output side to the supply line (28) of the third consumer (34), wherein the further priority valve (70) can be actuated, on the one hand, via a control pressure line (74) connected to the second load pressure line (66) and, on the other hand, to a control pressure line (72) which is connected on the hydraulic pump side to the supply line (28) of the third consumer (34).

7. Hydraulic assembly (12, 12', 12") according to one of Claims 1 to 6, **characterized in that** a second first consumer (30') is provided which can be connected to the hydraulic pump (21) via the supply line (24) for the first consumer (30), and which second first consumer (30') has a further load pressure line (94) which is connected to the second load pressure line (66) via a third shuttle valve (96), together with the load pressure line (43) of the one first consumer (30).

8. Hydraulic assembly (12, 12', 12") according to one of Claims 1 to 7, **characterized in that** the hydraulic pump (21) is embodied as a load-pressure-dependent variable displacement pump.

9. Hydraulic assembly (12, 12', 12") according to one of Claims 1 to 8, **characterized in that** the hydraulic pump (21) is embodied as a fixed displacement pump, and a further proportional valve (100) which can be actuated in a load-pressure-dependent fashion is provided, which proportional valve (100) discharges to the hydraulic tank (22) supply fluid which has been fed in a load-pressure-dependent fashion by the fixed displacement pump.

10. Hydraulic assembly (12, 12', 12") according to one of Claims 1 to 9, **characterized in that** the first consumer (30, 30') comprises a hydraulically actuated steering system and/or a hydraulically actuated brake.

11. Hydraulic assembly (12, 12', 12") according to one of Claims 7 to 10, **characterized in that** the second first consumer (30') comprises a hydraulically actuated steering system and/or a hydraulically actuated brake.

12. Hydraulic assembly (12, 12', 12") according to one of Claims 1 to 11, **characterized in that** the second or third consumer (32, 34) comprises a hydraulically actuated spring system or a hydraulically actuated lifting mechanism.

13. Hydraulic assembly (12, 12', 12") according to one of Claims 1 to 12, **characterized in that** in addition a throttle device (88) is provided which connects the first load pressure line (62) to the hydraulic tank (22).

14. Hydraulic assembly (12, 12', 12") according to one of Claims 1 to 13, **characterized in that** the load pressure line (42', 43, 90, 94) of the one and/or second first and/or of the second consumer (30, 30', 32) is connected to the hydraulic tank (22) via a pressure-limiting valve (86).

15. Agricultural vehicle (10) having a hydraulic assembly (12, 12', 12") according to one of the preceding claims.

## Revendications

1. Agencement hydraulique (12, 12', 12") pour commander les priorités d'alimentation de plusieurs récepteurs hydrauliques (30, 30', 32, 34), avec une pompe hydraulique (21) et un réservoir hydraulique (22), avec un premier récepteur hydraulique (30, 30') avec une priorité d'alimentation de premier niveau, avec un deuxième récepteur hydraulique (32) avec une priorité d'alimentation de deuxième niveau inférieure à celle de premier niveau et avec un troisième récepteur hydraulique (34) avec une priorité d'alimentation de troisième niveau inférieure à celle de deuxième niveau, chaque récepteur (30, 30', 32, 34) pouvant être relié de façon hydraulique à la pompe hydraulique (21) via une conduite d'alimentation (24, 26, 28) propre, les conduites d'alimentation (24, 26) pour le premier et le deuxième récepteur (30, 32) pouvant être reliées à la pompe hydraulique (21) via une soupape de priorité (44) à commande de pression de charge commune ainsi que la conduite d'alimentation (28) prévue pour le troisième récepteur (34) via une soupape de priorité (70) à commande de pression de charge supplémentaire et une première conduite de pression de charge (62) menant à la pompe hydraulique (21) étant reliée à une conduite de pression de charge (42') du troisième récepteur hydraulique (34) et à une deuxième conduite de pression de charge (66).

2. Agencement hydraulique (12, 12', 12") selon la revendication 1, **caractérisé en ce que** la soupape de priorité (44) à commande de pression de charge commune est réalisée sous la forme d'une soupape proportionnelle à 3/2 voies pouvant être reliée du côté de sortie à la conduite d'alimentation (24) du premier récepteur (30, 30') et à la conduite d'alimentation (26) du deuxième récepteur (32), la soupape de priorité (44) commune pouvant être commandée d'une part via une conduite de pression de commande (27) reliée à une conduite de pression de charge (43) du premier récepteur (30, 30') et d'autre part via une conduite de pression de commande (46) reliée à la conduite d'alimentation (24) du premier récepteur (30).

3. Agencement hydraulique (12, 12', 12") selon la revendication 1 ou 2, **caractérisé en ce que** la première conduite de pression de charge (62) est reliée, via une première soupape de commutation (64), à la conduite de pression de charge (42') du troisième récepteur hydraulique (34) et à la deuxième conduite de pression de charge (66), la deuxième conduite de pression de charge (66) étant reliée au premier et au deuxième récepteur hydraulique (30, 30', 32).

4. Agencement hydraulique (12, 12', 12") selon l'une quelconque des revendications 1 à 3, **caractérisé en ce que** la deuxième conduite de pression de charge (66) est reliée à une conduite de pression de charge (43) du premier récepteur (30, 30').

5. Agencement hydraulique (12, 12', 12") selon l'une quelconque des revendications 1 à 4, **caractérisé en ce que** la deuxième conduite de pression de charge (66) est reliée à une conduite de pression de charge (90) du deuxième récepteur (32), la deuxième conduite de pression de charge (90) étant reliée, via une deuxième soupape de commutation (92), aux conduites de pression de charge (43, 90, 94) du premier et du deuxième récepteur (30, 30', 32).

6. Agencement hydraulique (12, 12', 12") selon l'une quelconque des revendications 1 à 5, **caractérisé en ce que** la soupape de priorité (70) supplémentaire est réalisée sous la forme d'une soupape proportionnelle à 2/2 voies reliée du côté de sortie à la conduite d'alimentation (28) du troisième récepteur (34), la soupape de priorité (70) supplémentaire pouvant être commandée d'une part via la conduite de pression de commande (74) reliée à la deuxième conduite de pression de charge (66) et d'autre part à une conduite de pression de commande (72) reliée du côté de pompe hydraulique à la conduite d'alimentation (28) du troisième récepteur (34).

7. Agencement hydraulique (12, 12', 12") selon l'une quelconque des revendications 1 à 6, **caractérisé en ce qu'**un deuxième premier récepteur (30') est prévu, celui-ci pouvant être relié à la pompe hydraulique (21) via la conduite d'alimentation (24) prévue pour le premier récepteur (30) et comportant une conduite de pression de charge (94) supplémentaire reliée, via une troisième soupape de commutation (96), conjointement avec la conduite de pression de charge (43) du premier récepteur (30), avec la deuxième conduite de pression de charge (66).

8. Agencement hydraulique (12, 12', 12") selon l'une quelconque des revendications 1 à 7, **caractérisé en ce que** la pompe hydraulique (21) est formée sous la forme d'une pompe variable dépendant de la pression de charge.

9. Agencement hydraulique (12, 12', 12") selon l'une quelconque des revendications 1 à 8, **caractérisé en ce que** la pompe hydraulique (21) est réalisée sous la forme d'une pompe constante et qu'une soupape proportionnelle (100) supplémentaire dépendant de la pression de charge est prévue, celle-ci évacuant le fluide d'alimentation extrait par la pompe constante en fonction de la pression de charge en direction du réservoir hydraulique (22).

10. Agencement hydraulique (12, 12', 12") selon l'une quelconque des revendications 1 à 9, **caractérisé en ce que** le premier récepteur (30, 30') comprend une direction actionnable de façon hydraulique et/ou un frein actionnable de façon hydraulique.

11. Agencement hydraulique (12, 12', 12") selon l'une quelconque des revendications 7 à 10, **caractérisé en ce que** le deuxième premier récepteur (30') comprend une direction actionnable de façon hydraulique et/ou un frein actionnable de façon hydraulique.

12. Agencement hydraulique (12, 12', 12") selon l'une quelconque des revendications 1 à 11, **caractérisé en ce que** le deuxième ou le troisième récepteur (32, 34) comprend une suspension à ressort actionnable de façon hydraulique ou un mécanisme de levage actionnable de façon hydraulique.

13. Agencement hydraulique (12, 12', 12") selon l'une quelconque des revendications 1 à 12, **caractérisé en ce qu'**en outre, un dispositif d'étranglement (88) est prévu reliant la première conduite de pression de charge (62) au réservoir hydraulique (22).

14. Agencement hydraulique (12, 12', 12") selon l'une quelconque des revendications 1 à 13, **caractérisé en ce que** la conduite de pression de charge (42', 43, 90, 94) du premier et/ou du deuxième premier et/ou du deuxième récepteur (30, 30', 32) est reliée au réservoir hydraulique (22) via la soupape de limitation de pression (86).

15. Véhicule agricole (10) avec un agencement hydraulique (12, 12', 12") selon l'une quelconque des revendications précédentes.
